# EUROPEAN PATENT SPECIFICATION

(11) **EP 0 597 977 B1**
(45) Date of publication and mention of the grant of the patent: **15.11.1995**
(21) Application number: 92916969.6
(22) Date of filing: 12.08.1992
(51) Int. Cl.: B01D 46/00, B01D 46/12, B01D 45/14

(54) **FILTER ASSEMBLY**
FILTERANORDNUNG
ENSEMBLE DE FILTRE

(30) Priority: 16.08.1991 GB 91177287
(43) Date of publication of application: 25.05.1994
(73) Proprietor: BTR plc, London SW1P 2PL (GB)
(72) Inventor: SMITH, Clive Richard, Gaddesby, Leicestershire LE7 8WB (GB)
(74) Representative: Badger, John Raymond
(86) International application number: GB9201492
(87) International publication number: WO9303818

(56) References cited:
- EP-A- 0 084 899
- EP-A- 0 172 538
- EP-A- 0 285 247
- AT-B- 364 737

## Description

This invention relates to a filter assembly for use in the filtering of particulate matter from a flow of gas.

Conventionally a filter assembly comprises one or more filter elements mounted within a housing, a lower region of the housing either being integral with a collection hopper to collect particulate matter which has been arrested by the filter element(s), or having an opening through which the arrested particulate matter can fall onto a collection tray. The housing additionally comprises gas inlet and outlet zones and a fan assembly typically located above or to one side of the housing to draw gas therethrough. An example of a filter assembly of this type but additionally having a fan assembly at the inlet to push air into the housing is disclosed in EP-A-0285247.

The aforedescribed arrangement is particularly appropriate for smaller size filter assemblies. In the case of larger filter assemblies the arrangement becomes less convenient, particularly because of the space and load support requirements of the larger fan necessary to handle a greater flow rate of gas. For larger filtration requirements it is normal to separately floor mount the fan assembly and provide ducting between the fan inlet and an outlet zone of the filter housing. This results in an undesirable increase in the floor space required for an installation; also a greater installation time is involved as compared with a filter assembly that can be substantially wholly pre-assembled.

The present invention seeks to provide an improved filter assembly which facilitates a compact installation even in the case of a filter assembly intended to handle large volume flows. The invention seeks also to provide an improved modular type filter assembly.

In accordance with one of its aspects the present invention provides a filter assembly comprising a housing having a collection hopper arranged to collect particulate matter which has been arrested by a filter element located in the housing, housing inlet and outlet zones to direct a flow of unfiltered gas into the housing and a flow of filtered gas therefrom and fan means to urge gas to flow through the housing from said inlet zone to said outlet zone, said fan means being arranged to provide as exhaust a flow of filtered gas directed to impinge on the outside of the collection hopper to tend to vibrate the hopper and promote movement of particulate matter downwards over an inclined surface of the hopper.

The present invention further provides that preferably the collection hopper is of an asymmetric form; in that case the flow of gas from the fan means preferably is arranged to impinge substantially directly on that portion of the hopper which lies at the lowest angle of inclination to the horizontal.

To derive benefit from the vibration effect induced by gas flow directed against the collection hopper and achieve potentially useful space savings, the invention envisages that preferably the hopper shall have a portion which lies at an angle to the horizontal less than the normal, 60° minimum, level of inclination. The present invention envisages that the inclination of the hopper, or a part thereof in the case of an asymmetric hopper, may be in the range 40° to 60°, or in the range 45° to 55°.

The hopper may be of for example a rectangular or a circular cross-section as viewed in plan.

Particularly where it is wished to provide a modular type of filter assembly, it is envisaged that the fan means may be provided, e. g. alongside the collection hopper, to lie directly and wholly underneath the filter housing. Thus the filter assembly may lie within a space envelope such as that of a rectangular prism.

The fan means and collection hopper may be located within and/or define at least in part an enclosure which acts in the manner of an acoustic chamber to suppress outward transmission of noise, and in particular noise from the fan means. The acoustic chamber may comprise walls of sound absorbing material. The acoustic chamber may have an outlet zone which is disposed to one side of the collection hopper which is substantially opposite the fan means.

Conventionally particulate material is removed from the hopper by opening a rotary valve, the material then falling into a collection bin. In the case of a filter assembly having an acoustic enclosure for the collection hopper, the space for a collection bin may be provided either within the acoustic enclosure, or external thereof.

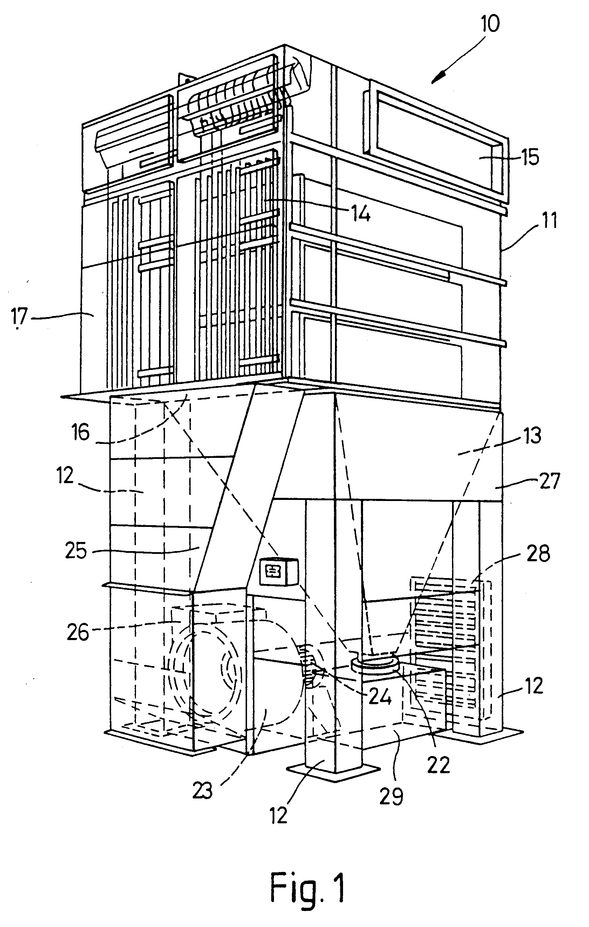

Embodiments of the present invention will now be described, by way of example only, with reference to the accompanying diagrammatic drawings in which:-
- Figure 1: is a perspective view, part cut away of a filter assembly in accordance with the present invention;
- Figure 2: is a side view of the filter assembly of Figure 1;
- Figure 3: is a front view of the filter assembly of Figure 1;
- Figure 4: shows part of a filter assembly having a conventional hopper, and
- Figure 5: is a view corresponding to that of Figure 4 but of a filter assembly in accordance with one aspect of the present invention.

An air filter assembly 10 comprises a filter element housing 11 supported on four legs 12 arranged to surround a collection hopper 13 provided underneath the housing 11.

The housing 11 contains a plurality of individual filter elements 14 each of the so-called positive type, i. e. of a type which collect particulate matter from a stream of air by drawing the air into internal pockets or like chamber(s) defined by each filter element. Thus dust is arrested by an external surface of each element; generally it will accumulate on that surface rather than normally fall freely therefrom, and in that case accumulated dust can be dislodged periodically in a known manner (e. g. by reverse air-jet pulsation or by mechanical vibration) to fall into the collection hopper 13.

The housing has a pair of side inlets 15 through which dust laden air may enter the housing and a downwardly facing outlet 16 for outward flow of filtered air from a side zone 17 of the housing adjacent the outlet of each of the filter elements 14.

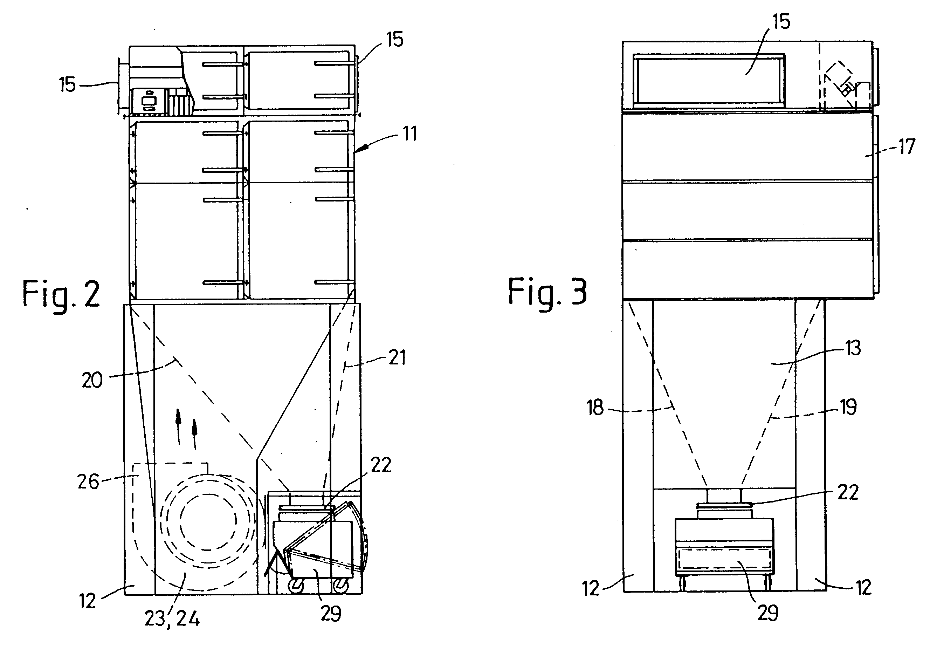

The hopper 13 is of a rectangular section in plan, reducing in size from its upper to its lower end in usual manner, and is comprised by four metal sheets (18,19,20,21) each inclined to the vertical. As viewed from the front of the filter assembly as shown in Figure 3, two of the side sheets 18,19 are disposed at equal angles to the horizontal, whilst as viewed from the side, as shown in Figure 2, the other two sheets 20,21 are arranged asymmetrically, the sheet 20 lying at 50° to the horizontal and the sheet 21 lying at a much steeper angle of in the order of 75°. In consequence the lower outlet 22 of the hopper lies to one side of the space underneath the filter housing 11 as viewed in Figure 2.

By virtue of the asymmetric positioning of the hopper walls 20,21 there arises beneath the housing 11 sufficient space to locate an extraction fan 23 and associated electric motor 24. The fan is connected by a duct 25 to the outlet 16 of the filter housing and has an exhaust duct 26 which faces upwardly underneath that wall 20 of the hopper which has the lowest angle of inclination to the horizontal. In use of the filter assembly the fan serves to draw contaminated air into the filter housing 11 via the inlets 15 and direct filtered air from the housing zone 17 through the outlet 16 to issue from the exhaust duct 26 in a direction in which it causes it to impinge against the underside of the hopper wall 20.

Acoustic insulation material is used to form four walls 27 which surround the four legs 12 and define the acoustic chamber that contains the fan and motor assembly and the hopper. One wall of the acoustic chamber is apertured to contain an outlet grid 28 for flow of filtered air to atmosphere. Another wall contains a door (not shown) which enables a collection bin 29 to be wheeled into and out of the acoustic chamber to collect accumulated dust from the hopper by opening of a conventional rotary valve provided at the lower end 22 of the hopper.

The aforedescribed arrangement in which exhaust from the fan is directed against a wall of the hopper allows a wall 20 to be at a shallower angle than normal, as aforedescribed, without the risk of material becoming trapped in the hopper by bridging the outlet 22.

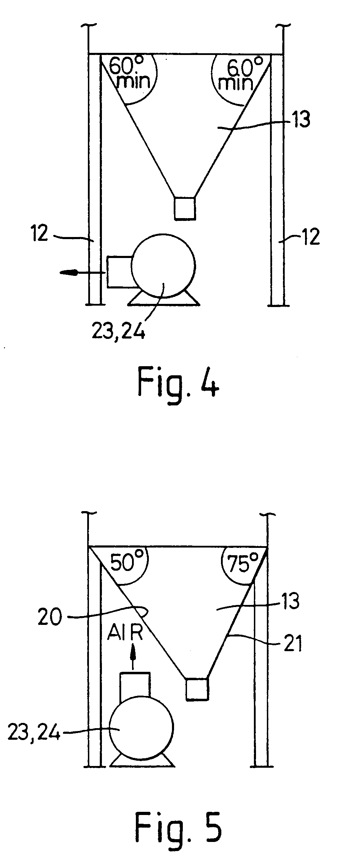

The resulting advantageous effect is seen clearly from comparison of Figures 4 and 5. Figure 4 shows a conventional type hopper arrangement in which the height of the hopper has to be sufficient to provide a minimum inclination of 60° to the hopper sidewalls. There is relatively little space for mounting of a fan and motor assembly underneath the filter housing, and even then the fan would tend to limit access to the lower outlet of the hopper. In contrast, as shown in Figure 5, by virtue of directing exhaust from the fan against an underside of the hopper, the lower permissible angle for a hopper wall has the twofold advantage of reducing the vertical height of the hopper, and thus lowering the supported filter housing, and of moving the hopper outlet away from the fan so that the outlet is better accessible.

It is to be understood that the fan motor assembly and collection hopper need not be contained within an acoustic chamber. Thus the exhaust from the fan may be directed against an underside of the hopper and then be allowed to flow freely away from the filter assembly through any of the gaps between the support legs 12.

## Claims

1. A filter assembly (10) comprising a housing (11) having a collection hopper (13) arranged to collect particulate matter which has been arrested by a filter element (14) located in the housing, housing inlet and outlet zones (15,16) to direct a flow of unfiltered gas into the housing and a flow of filtered gas therefrom and fan means (23) to urge gas to flow through the housing from said inlet zone (15) to said outlet zone (16), characterised in that said fan means (23) is arranged to provide as exhaust a flow of filtered gas directed to impinge on the outside of the collection hopper (13) to tend to vibrate the hopper and promote movement of particulate matter downwards over an inclined surface (20) of the hopper.

2. A filter assembly according to claim 1 characterised in that the collection hopper (13) is of an asymmetric form.

3. A filter assembly according to claim 2 characterised in that the fan means (23) is arranged to direct as exhaust a flow of gas to impinge substantially directly on that portion (20) of the hopper which lies at the lowest angle of inclination to the horizontal.

4. A filter assembly according to any one of the preceding claims characterised in that the fan means (23) is arranged to provide, as exhaust, said flow of filtered gas to impinge on a hopper surface (20) which lies at an angle in the range 40° to 60° relative to the horizontal.

5. A filter assembly according to claim 3 characterised in that the fan means (23) is arranged to provide, as exhaust, said flow of filtered gas to impinge on a hopper surface (20) which lies at an angle in the range 45° to 55° relative to the horizontal.

6. A filter assembly according to any one of the preceding claims characterised in that the fan means (23) and collection hopper (13) are arranged to lie substantially directly and wholly underneath the filter housing (11).

7. A filter assembly according to any one of the preceding claims characterised in that the fan means (23) and collection hopper (13) are located within and/or define at least in part an enclosure which acts as an acoustic chamber (27).

## Patentansprüche

1. Filteraufbau (10) mit einem Gehäuse (11), das einen Sammeltrichter (13) zur Aufnahme von teilchenförmigem Material, das durch ein im Gehäuse angeordnetes Filterelement (14) zurückgehalten wurde, Gehäuseeinlaß- und Auslaßzonen (15, 16) aufweist, um einen Strom von ungefiltertem Gas in das Gehäuse und einen Strom von gefiltertem Gas aus diesem herauszuleiten, sowie eine Gebläseeinrichtung (23), um das Gas von der Einlaßzone (15) zur Auslaßzone (16) durch das Gehäuse strömen zu lassen,
dadurch gekennzeichnet,
daß die Gebläseeinrichtung (23) so angeordnet ist, daß sie als Abgabe einen Strom von gefiltertem Gas auf der Außenseite des Sammeltrichters (13) auftreffen läßt, um den Trichter vibririeren zu lassen und eine Bewegung des teilchenförmigen Materials nach unten über eine geneigte Fläche (20) des Trichters zu unterstützen.

2. Filteraufbau nach Anspruch 1, dadurch gekennzeichnet, daß der Sammeltrichter (13) eine asymetrische Form hat.

3. Filteraufbau nach Anspruch 2, dadurch gekennzeichnet, daß die Gebläseeinrichtung (23) so angeordnet ist, daß sie als Abgabe einen Strom von Gas im wesentlichen direkt auf den Teil (20) des Trichters auftreffen läßt, der am untersten Neigungswinkel zur Horizontalen liegt.

4. Filteraufbau nach einem der vorhergehenden Ansprüche, dadurch gekennzeichnet, daß die Filtereinrichtung (23) als Abgabe den Strom von gefiltertem Gas auf einer Trichterfläche (20) auftreffen läßt, der bei einem Winkel, im Bereich von 40° bis 60° relativ zur Horizontalen liegt.

5. Filteraufbau nach Anspruch 3, dadurch gekennzeichnet, daß die Gebläseeinrichtung (23) als Abgabe den Strom von gefiltertem Gas auf einer Trichterfläche (20) auftreffen läßt, der bei einem Winkel im Bereich vom 45° bis 55° relativ zur Horizontalen liegt.

6. Filteraufbau nach einem der vorhergehenden Ansprüche, dadurch gekennzeichnet, daß die Gebläseeinrichtung (23) und der Sammeltrichter (13) so angeordnet sind, daß sie im wesentlichen direkt und insgesamt unter dem Filtergehäuse (11) liegen.

7. Filteraufbau nach einem der vorhergehenden Ansprüche, dadurch gekennzeichnet, daß die Gebläseeinrichtung (23) und der Sammeltrichter (13) innerhalb einer Schallschluckkammer (27) angeordnet sind und/oder wengistens teilweise eine Umhüllung begrenzen, die als Schallschluckkammer wirkt.

## Revendications

1. Ensemble formant filtre (10) comprenant un bâti (11) qui comporte une trémie de collecte (13) disposée pour recueillir une matière particulaire arrêtée par un élément filtrant (14) situé dans le bâti, des zones d'entrée et de sortie (15, 16) destinées à diriger un écoulement de gaz non filtré dans le bâti et un écoulement de gaz filtré hors de celui-ci, et un moyen formant ventilateur (23) destiné à obliger un gaz à circuler à travers le bâti de ladite zone d'entrée (15) à ladite zone de sortie (16), caractérisé en ce que ledit moyen formant ventilateur (23) est disposé pour délivrer en sortie un écoulement de gaz filtré dirigé pour entrer en collision avec la face extérieure de la trémie de collecte (13) afin d'avoir tendance à faire vibrer la trémie et à promouvoir un déplacement de la matière particulaire vers le bas sur une surface inclinée (20) de la trémie.

2. Ensemble formant filtre selon la revendication 1, caractérisé en ce que la trémie de collecte (13) a une forme asymétrique.

3. Ensemble formant filtre selon la revendication 2, caractérisé en ce que le moyen formant ventilateur (23) est disposé pour diriger en sortie un écoulement de gaz de façon que celui-ci entre sensiblement directement en collision avec la partie (20) de la trémie, qui s'étend suivant l'angle d'inclinaison le plus faible par rapport à l'horizontale.

4. Ensemble formant filtre selon l'une quelconque des revendications précédentes, caractérisé en ce que le moyen formant ventilateur (23) est disposé pour délivrer en sortie ledit écoulement de gaz filtré de façon que celui-ci entre en collision avec une surface (20) de la trémie, qui s'étend suivant un angle dans la plage de 40° à 60° par rapport à l'horizontale.

5. Ensemble formant filtre selon la revendication 3, caractérisé en ce que le moyen formant ventilateur (23) est disposé pour délivrer en sortie ledit écoulement de gaz filtré de façon que celui-ci entre en collision avec une surface (20) de la trémie, qui s'étend suivant un angle dans la plage de 45° à 55° par rapport à l'horizontale.

6. Ensemble formant filtre selon l'une quelconque des revendications précédentes, caractérisé en ce que le moyen formant ventilateur (23) et la trémie de collecte (13) sont disposés pour s'étendre sensiblement directement et entièrement sous le bâti (11) du filtre.

7. Ensemble formant filtre selon l'une quelconque des revendications précédentes, caractérisé en ce que le moyen formant ventilateur (23) et la trémie de collecte (13) sont situés à l'intérieur d'une enceinte et/ou définissent au moins en partie une enceinte qui joue le rôle d'une chambre acoustique (27).
